# EUROPEAN PATENT APPLICATION

(11) **EP 4 755 742 A1**
(43) Date of publication of application: **10.06.2026**
(21) Application number: 24849330.6
(22) Date of filing: 30.04.2024
(51) Int. Cl.: B60W 30/06, B60W 60/00, B60L 53/66, B60L 53/65, H04W 4/44

(54) **METHOD FOR CONTROLLING DRIVING OF ADS VEHICLE BY AUTOMATED VALET DRIVING SYSTEM (AVDS) AND DEVICE FOR CONTROLLING DRIVING OF ADS VEHICLE BY AVDS**

(30) Priority: 28.07.2023 KR 20230098858; 28.07.2023 KR 20230098859
(71) Applicant: Hyundai Mobis Co., Ltd., Gangnam-gu Seoul 06141 (KR)
(72) Inventor: LEE, Jae Yong, Seoul 06998 (KR)
(74) Representative: Jung, Minkyu
(86) International application number: PCT/KR2024/005897
(87) International publication number: WO 2025/028758

(57) **Abstract**

An automated valet driving method includes identifying a subject vehicle (SV), performing check-in for the SV, and performing an autonomous vehicle operation for the SV by an automated valet driving system (AVDS). An automated valet driving device includes a memory and a processor connected to the memory, wherein the processor is configured to identify an SV, perform check-in for the SV, and perform an autonomous vehicle operation for the SV by the AVDS.

## Description

### [Technical Field]

Embodiments relate to a method and apparatus for performing automated valet driving.

### [Background Art]

An automated valet driving system (AVDS) includes a user, a system, and an autonomous vehicle. The AVDS may transfer autonomous driving control authority from a user to the autonomous vehicle. The AVDS may perform valet driving control using an autonomous driving function. An efficient control method, data transmission/reception method, etc. are required for the AVDS to perform valet driving by controlling a vehicle.

### [Disclosure]

### [Technical Problem]

Embodiments provide an apparatus and method for efficiently performing automated valet driving.

Embodiments provide an automated valet driving method and device for safely and efficiently performing valet driving by autonomously performing vehicle driving.

However, embodiments are not limited to the above-described technical issues, and the scope of rights of the embodiments may be expanded to other technical issues that may be inferred by a person skilled in the art based on the entire content described.

### [Technical Solution]

An automated valet driving method according to embodiments includes identifying a subject vehicle (SV), performing check-in for the SV, and performing an autonomous vehicle operation for the SV by an AVDS. An automated valet driving device according to embodiments includes a memory and a processor connected to the memory, wherein the processor is configured to identify an SV, perform check-in for the SV, and perform an autonomous vehicle operation for the SV by the AVDS.

An automated valet driving method according to embodiments includes identifying an SV, performing check-in for the SV, and performing an autonomous vehicle operation for the SV by an AVDS, and the performing an autonomous vehicle operation may include controlling, by the AVDS, a traveling start time of the SV based on an expected charging completion time of a vehicle at a target charging station. An automated valet driving device according to embodiments includes a memory and a processor connected to the memory, wherein the processor may be configured to identify an SV, perform check-in for the SV, perform an autonomous vehicle operation for the SV by the AVDS, and control a traveling start time of the SV based on an expected charging completion time of a vehicle at a target charging station.

An automated valet driving method according to embodiments includes identifying an SV, performing check-in for the SV, and performing an autonomous vehicle operation for the SV by an AVDS, wherein data for the autonomous vehicle operation may be transmitted and received by the AVDS. An automated valet driving device according to embodiments includes a memory and a processor connected to the memory, wherein the processor may be configured to identify an SV, perform check-in for the SV, and perform an autonomous vehicle operation for the SV by the AVDS, and data for the autonomous vehicle operation may be transmitted and received by the AVDS.

### [Advantageous Effects]

According to the embodiments, the method and apparatus can perform autonomous valet driving efficiently.

According to the embodiments, the method and apparatus can perform autonomous valet driving safely.

According to the embodiments, the method and apparatus can perform autonomous valet driving accurately.

### [Description of Drawings]

The drawings are included for further understanding of the embodiments, and the drawings represent the embodiments along with descriptions related to the embodiments. For better understanding of the various embodiments described below, reference should be made to the following description of the embodiments in conjunction with the following drawings, in which like reference numerals refer to corresponding parts throughout the drawings.
FIG. 1 illustrates a basic flow of an AVDS according to embodiments.
FIG. 2 illustrates a system structure related to a method/apparatus according to embodiments.
FIG. 3 illustrates a vehicle control device according to embodiments.
FIG. 4 illustrates a structure of a vehicle according to embodiments.
FIG. 5 illustrates a timeline of traveling of an AVDS-based vehicle to an electric vehicle (EV) charging station according to embodiments.
FIG. 6 illustrates an automated valet driving method according to embodiments.
FIG. 7 illustrates an automated valet driving method according to other embodiments.
FIG. 8 illustrates an automated valet driving method according to still other embodiments.
FIG. 9 illustrates an EV charging station based on the AVDS according to embodiments.
FIG. 10 illustrates an automated valet driving method according to embodiments.

### [Best Mode]

Preferred embodiments of the embodiments will be described in detail, examples of which are shown in the attached drawings. The detailed description below with reference to the accompanying drawings is intended to explain preferred embodiments of the embodiments rather than showing only embodiments that may be implemented according to embodiments. The following detailed description includes details to provide a thorough understanding of the embodiments. However, it will be apparent to those skilled in the art that embodiments may be practiced without these details.

Most of the terms used in the embodiments are selected from common ones widely used in the field, but some terms are arbitrarily selected by the applicant and meanings thereof are detailed in the following description as necessary. Accordingly, the embodiments should be understood based on intended meanings of the terms rather than mere names or meanings thereof.

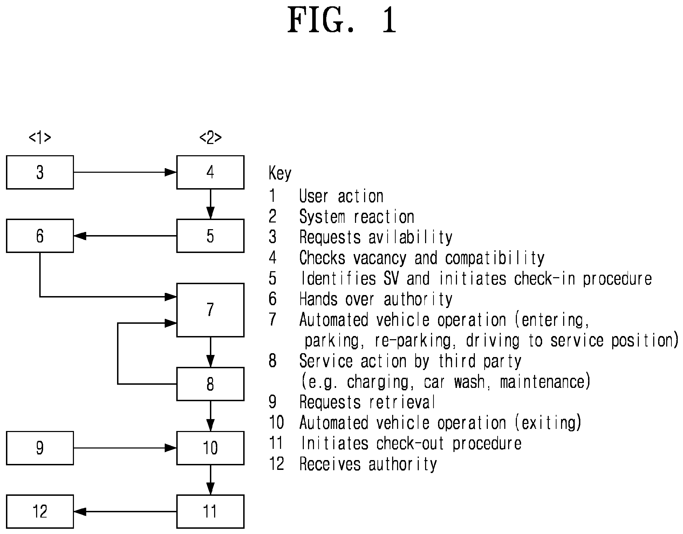

FIG. 1 illustrates a basic flow of an AVDS according to embodiments.

FIG. 1 illustrates a basic flow of an AVDS. The AVDS is extension of a use case of ISO 23374-1 automated valet parking system (AVPS) and an operational design domain (ODD). This system contributes to realization of safe and reliable low-speed Level 4 unmanned driving of a vehicle, and promotes fast and smooth introduction of a future L4 system to a market based on experience gained using the AVDS at low speed in a well-defined ODD.

The AVDS provides a low-speed automatic valet parking service to a vehicle owner. The service is not limited to driverless driving within dedicated parking facilities and allows driverless driving in designated outdoor spaces. Basically, both the AVPS and the AVDS describe a journey from a point A to a point B.

One example use case addressed by the AVDS is valet parking in an airport terminal. The AVPS describes SAE L4 driving in a dedicated parking facility, while the AVDS extends a drop-off area to areas outside the parking facility. After a driver leaves a designated local AVDS drop-off area, the system automatically guides a vehicle on a public road to an entrance to the parking facility and guides the vehicle to an empty parking space or another space as necessary from the entrance. Referring to a space of interest, for example, other use cases addressed by the AVDS may include driving cases at an electric charging station or a car cleaning station or on company premises for logistics purposes.

The AVDS is expected to achieve end-user benefits in terms of saving time, reducing stress, reducing energy consumption of the vehicle, and meet user expectations for a lot of low-speed maneuvering functions. The AVDS provides an automatic charging process for an electric vehicle without requiring a driver to invest time and optimizes utilization of the limited number of charging stations. The AVDS on company premises may reduce labor costs through an unmanned vehicle control system.

To contribute to realization of safe and reliable unmanned AVDS operation, requirements specified in this document are based on performance of state-of-the-art technology available at the time of publication. Therefore, this part will be revised in the future as technology improves.

Embodiments include specific technical solutions for communication interfaces (for example, communication methods and message protocols) due to differences in technologies (for example, spectrum allocation) that are available and commonly used worldwide. Therefore, the embodiments are linked to communication interfaces at national/regional level to ensure interoperability.

The AVDS performs Level 4 autonomous driving of an individual or a plurality of unoccupied vehicles at speeds less than 30 km/h within a defined operating area.

The embodiments designate system frameworks, operational sequences and communication interfaces, performance requirements for operation and management functions, environmental conditions within the operating area, and test procedures to verify performance requirements of the AVDS. The AVDS is considered a use case and ODD extension of ISO 23374-1, including indoor and outdoor applications, which are unmanned operation on company premises, driving on public roads, and outdoor valet parking (for example, from an airport terminal to a parking lot). In addition, the AVDS enables additional services. Further, the AVDS is applied to the cases of driving to electric vehicle charging stations or car washes.

The AVDS includes physically separate subsystems distributed among vehicles, facility equipment, and user domains. Functions of the AVDS are realized by the cooperation of these subsystems, which in most cases are provided by different organizations. The embodiments include a system architecture using subsystems and communication interfaces between subsystems at a logical level.

The AVDS manages system participants (for example, AVDS-compatible vehicles, facilities, and users) and provides necessary interfaces therebetween. The embodiments include requirements for management functions such as verifying compatibility between vehicles and premises, performing remote assistance and recovery when autonomous driving is impossible, and issuing shutdown commands in response to actions of other facility users.

In addition, the AVDS is intended to be used by service providers or facility operators receiving vehicle authorization from individual service recipients.

The embodiments may refer to the following standard documents.
ISO 23374-1, Intelligent transport systems - Automated valet parking systems (AVPS) - Part 1: System framework, requirements for automated driving, and communication interface
ISO 20900, Intelligent transport systems - Partially Automated Parking Systems (PAPS) - Performance Requirements and Test Procedures
ISO 8608 Mechanical vibration - Road surface profiles - Reporting of measured data
ISO 19206-2, Road vehicles - Test devices for target vehicles, vulnerable road users and other objects, for assessment of active safety functions - Part 2: Requirements for pedestrian targets
ISO 19206-4 Road vehicles - Test devices for target vehicles, vulnerable road users and other objects, for assessment of active safety functions - Part 4: Requirements for bicyclist targets.

Definitions of terms according to embodiments are as follows.

Service provider of AVDS: An organization that provides the AVDS to operate unmanned vehicles. User of AVDS: An individual service recipient who transfers/recovers rights (3.3) to/from a service provider through the AVDS. Authority: The right and ability to perform specific tasks in an SV. SV: A vehicle equipped with a vehicle operation subsystem of the AVDS. Premises: Public or private areas where the AVDS is available. Parking facility: A public or private parking lot with AVDS capability. Operation zone: A geographic area within an AVDS-compliant premises where automated driving may be performed. Drop-off area: A location within an operating area where a user leaves the SV and transfers authority to a service provider. Pick-up Area: A location within the operating area where a service provider transfers the SV for user boarding and hands over authority. Parking Spot: A destination within a work area where one vehicle may be parked or temporarily stored. Stopping point: A destination within a work area where the SV stops and remains under certain state conditions, depending on the considered use case. Parking area: An area within an operating area including a plurality of parking spaces. Destination: a location within a work area where the SV is to be transported. Route: A planned traversal of the SV from an origin to a destination. Path: A planned sequence of way points for the SV to follow. Trajectory: A planned route including time information, automated valet parking facility equipment. PFE: Physical equipment installed in parking facilities to support the AVPS, automated valet driving premises equipment. DPE: Physical equipment installed in an operating area of AVDS premises to support the AVDS. Coded marker: A physical or logical marker using a unique ID installed on the AVDS premises detectable by the SV to support localization. Anonymous marker: A physical or logical marker without a unique ID installed on the AVDS premises detectable by the SV to support localization. Designed speed: A situational speed of the SV designed for driving in a given situation (for example, a traffic situation and an environmental condition) as determined by the AVDS. Designed distance: A situational physical distance by design from the SV to other facilities, road users, objects or structures to be maintained by the AVDS in a given situation while performing autonomous driving. Subsystem: A logical level of AVDS component including one or more functions. Function: A function of the AVDS that contributes to processing inputs to the system and converting the inputs into appropriate outputs. (Autonomous driving service) reservation: Basic agreement between the user and the service provider with regard to the operation and management of the SV within a specific premises. (Automatic valet driving) session: An interaction sequence for a given SV between check-in and check-out. (Automatic valet driving) mission: A series of interactions in which the SV is automatically operated by the AVDS from a parking location to a destination for a specific purpose. (Test) scenario: A description of a complete traversal from an origin to a destination to be performed for testing. (Test) scene: A description of a specific event performed for a test, not including an origin or a destination. System operator (SO): A role of an organization that manages vehicle operations in an operation area of the AVDS premises, which includes tasks monitored while being automatically performed or manually performed by individuals from remote locations. Premises (PM): A role of an organization in maintaining a work area in an operable and safe condition in accordance with AVDS requirements. Orchestration system (OS): A system that classifies a session or several connected sessions into a single mission and arranges an executable and optimized sequence of such missions. Value added service system (VA): A role of a service system that provides dedicated service management and a communication interface to the AVDS

### Definitions of abbreviations according to embodiments are as follows.

ADS (Automated Driving System), DDT (Dynamic Driving Task), OEDR (Object and Event Detection and Response), ODD (Operational Design Domain), SV (Subject Vehicle), FV (Forward Vehicle), PFE (automated valet Parking Facility Equipment), DPE (automated valet Driving Premises Equipment), VMC (Vehicle Motion Control), DSRC (Dedicated Short Range Communication), VRU (Vulnerable Road User), RO (Remote vehicle Operation (subsystem)), VO (on-board Vehicle Operation (subsystem)), UF (User Frontend (subsystem)), UB (User Backend (subsystem)), VB (Vehicle Backend (subsystem)), OB (Operator Backend (subsystem)), PM (automated valet Parking facility Management (subsystem)), DM (automated valet Driving premises Management (subsystem)), VA (value added service system)

FIG. 1 illustrates a basic flow of the AVDS based on a user action and a system response. FIG. 1 is a representative use case showing a flow in which a user initially transfers authority to a service provider.

In the AVDS, the user may request an additional service (for example, EV charging or car washing) to be performed while authority of the SV remains with the AVDS service provider. The requested service and earliest pickup time may be transferred to a system along with a reservation. While authority is previously with the AVDS service provider, an additional service may be requested depending on the remaining period.

These sessions, which include additional services, include more missions and tasks than those of the AVPS (for example, in the following order: park, wait, charge, park, wait, wash, and park). An orchestration system is in charge of sequencing the requested services and organizing the corresponding mission within a given time. Additional services are treated as additional missions, and the vehicle is driven to a designated location where the service is performed and the vehicle is re-parked at the original parking location or another location. Re-parking automatically occurs after the requested service is completed (for example, charging is completed, and car washing is completed), and there is a parking space available for the next service or re-parking. No user request is required. For each additional service, compatibility of the vehicle and service needs to be checked. This includes geometric (for example, vehicle height, width, length, and charging plug location), electrical (for example, plug type, charging power, and requested charging level) and other specific service characteristics.

Referring to FIG. 1, an AVDS service is provided according to <1> user action and <2> system reaction. An autonomous driving method and apparatus according to embodiments may correspond to a terminal for the user action and/or a system for the system reaction. The autonomous driving method and apparatus according to embodiments may be referred to as an automated valet driving method/device, or a method/device, etc. for brevity.

The method/apparatus according to embodiments receives a request from a user. The method/device according to embodiments checks empty space and compatibility for valet driving. The method/apparatus according to embodiments identifies an SV and activates a check-in process. The method/device according to embodiments receives autonomous driving authority from the user. The method/apparatus according to embodiments performs autonomous vehicle operation. For example, operations according to embodiments may include entering, parking, re-parking, and driving to a service position. The method/apparatus according to embodiments may selectively perform a service action by a third party. For example, there may be charging, car washing, maintenance, etc. The method/apparatus according to embodiments may allow the user to request collection. The method/apparatus according to embodiments may perform autonomous vehicle operations. For example, it is possible to perform exiting. The method/apparatus according to embodiments may activate a check-out procedure. The method/apparatus according to embodiments delivers authority to the user.

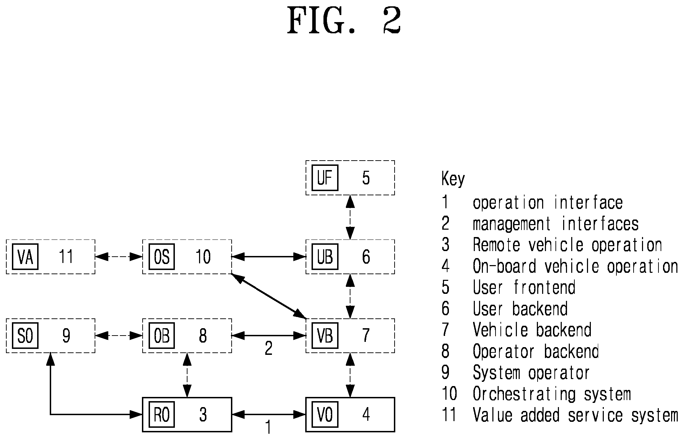

FIG. 2 illustrates a system structure associated with the method/apparatus according to embodiments.

FIG. 2 illustrates a system structure related to a method and apparatus for performing the basic flow of the AVDS of FIG. 1.

FIG. 2 is a logical structure of a subsystem of the AVDS. Implementation of logical subsystems with respect to a physical component may vary depending on the system design. In addition, the subsystem may include a plurality of physical components. For example, a remote vehicle operation subsystem may include a sensor, a control device, and a communication device.

Systems according to embodiments may perform and include methods/apparatus according to embodiments. For example, an AVDS device/system of the method/apparatus according to embodiments may include an operator backend (OB), an orchestrating system (OS), and/or remote vehicle operation (RO). The AVDS device/system according to embodiments may correspond to a server. A user terminal of the method/apparatus according to embodiments may include a user frontend (UF) and/or a user backend (UB). A vehicle of the method/apparatus according to embodiments may include a vehicle backend (VB) and/or on-board vehicle operation (VO). The system of the method/apparatus according to embodiments may further include a service system (value added service system, VA) and/or a system operator (SO). An operation according to embodiments may be performed by each component of the system of FIG. 2. Each component of FIG. 2 may correspond to hardware, software, processor, and/or a combination thereof.

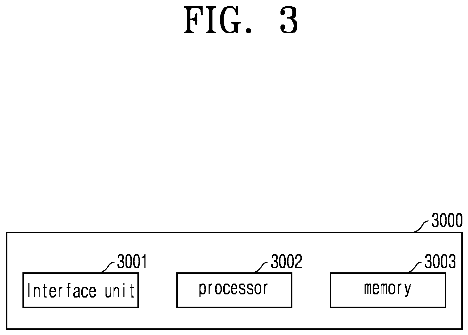

FIG. 3 illustrates a vehicle control device according to embodiments.

The vehicle control device 3000 according to embodiments is a device that controls an operation of a vehicle according to embodiments. The vehicle control device may be referred to as an autonomous driving integrated controller 600. The vehicle control device may include an interface unit 3001, a processor 3002, and a memory 3003.

The memory may store instructions, signaling information, data, etc. for performing operations according to embodiments. The memory may be connected to the interface unit and the processor to transmit and receive necessary signals.

The interface unit may receive signals, information, data, etc. received from the vehicle control device and transmit the signals, information, data, etc. to the memory and/or the processor. In addition, signals, information, data, etc. generated from the memory and/or the processor may be transmitted to the vehicle and/or the driver and/or passengers.

The processor may perform vehicle control operations according to embodiments based on data and/or instructions stored in the memory.

The vehicle control device of FIG. 3 may correspond to a device mounted in a vehicle or a terminal device that controls the vehicle.

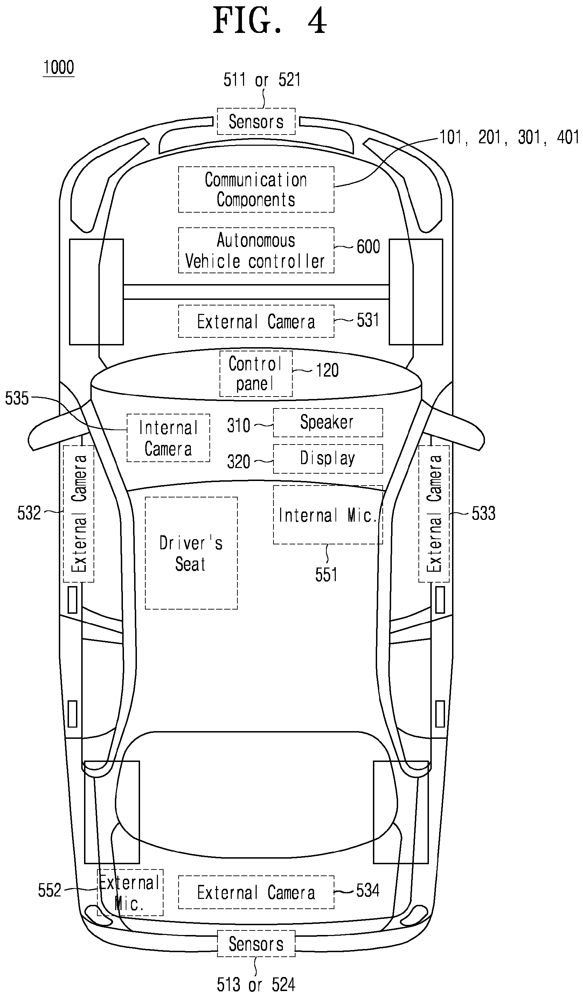

FIG. 4 illustrates a structure of a vehicle according to embodiments.

The vehicle according to embodiments may be configured as illustrated in FIG. 4 and may perform autonomous driving using an autonomous driving control system. The vehicle according to embodiments may be referred to as an autonomous vehicle, a robot, urban air mobility (UAM) aircraft, an autonomous driving device, etc.

An autonomous vehicle 1000 may be implemented around the autonomous driving integrated controller 600 that transmits and receives data required for autonomous driving control of the vehicle through a driving information input interface 101, a traveling information input interface 201, a passenger output interface 301, and a vehicle control output interface 401. However, the autonomous driving integrated controller may be referred to as a controller, a processor, or simply a controller in this specification.

The autonomous driving integrated controller may acquire driving information according to operation of a passenger for a user input unit in an autonomous driving mode or a manual driving mode of the vehicle through the driving information input interface. The user input unit may include a driving mode switch and a control panel 120 (for example, a navigation terminal mounted in the vehicle, a smartphone or a tablet computer carried by the passenger, etc.), and accordingly, the driving information may include driving mode information and navigation information of the vehicle.

In addition, upon determining that a warning is necessary to the driver in the autonomous driving mode or the manual driving mode of the vehicle, the autonomous driving integrated controller may provide warning information to the driver through the passenger output interface along with traveling state information. A speaker 310 and a display device 320 may be included to output such traveling state information and warning information audibly and visually. In this instance, the display device may be implemented as the same device as the control panel described above, or may be implemented as a separate and independent device.

In addition, the autonomous driving integrated controller may transmit control information for driving control of the vehicle to a sub-control system applied to the vehicle through the vehicle control output interface in the autonomous driving mode or the manual driving mode of the vehicle. The sub-control system for driving control of the vehicle may include at least one of a motor control system, an engine control system, a braking control system, or a steering control system, and the autonomous driving integrated controller may transmit at least one of motor control information, engine control information, braking control information, or steering control information as control information to each sub-control system through the vehicle control output interface.

The autonomous driving integrated controller may acquire driving information according to operation of the driver and traveling information indicating a traveling state of the vehicle through the driving information input interface and a traveling information input interface, respectively, and provide traveling state information and warning information generated according to an autonomous driving algorithm through the passenger output interface.

Meanwhile, to ensure stable autonomous driving of the vehicle, the autonomous driving device according to embodiments may include a sensor unit to detect objects around the vehicle, such as surrounding vehicles, pedestrians, roads, or fixed facilities (for example, traffic lights, signposts, traffic signs, construction fences, etc.).

The sensor unit may include one or more of a LiDAR sensor, a radar sensor, and a camera sensor to detect surrounding objects outside the vehicle. It is possible to include a front LiDAR sensor 511, a front radar sensor 521, a rear LiDAR sensor 513, a rear radar sensor 524, a left camera sensor 532, a right camera sensor 533, an internal camera sensor 535, a front camera sensor 531, a rear camera sensor 534, etc. The sensor unit may be connected to microphones 551 and 552.

The embodiments relate to a method of controlling driving of an ADS vehicle to an EV charging station by the AVDS.

The embodiments relate to international standards ISO 23374-1 (AVPS) and ISO 12768-1 (AVDS). The embodiments relate to an automated valet parking system (hereinafter referred to as "AVPS") or an automated valet driving system (hereinafter referred to as "AVDS"). The embodiments provide a method and apparatus in which the ADS vehicle (conceptually the same concept as a standard "SV") is autonomously driven from a parking position to an EV charging station and charged with electricity and returns back to the parking position or is headed to another position through autonomous driving after completion of charging.

The current international standard ISO 23374-1 or ISO 12768-1 merely describes a method/apparatus for moving the ADS vehicle to the EV charging station immediately after the EV charging station is vacated in response to completion of charging of a previous EV when the AVPS or AVDS sends the ADS vehicle to the EV charging station. However, the current international standard fails to define a method/apparatus for sending the ADS vehicle to the EV charging station before completion of charging of the previous EV in consideration of a charging completion time of the previous EV. Therefore, the embodiments describe a method/apparatus for driving the ADS vehicle in advance before completion of charging of the EV in consideration of the charging completion time of the previous EV to achieve efficient and safe automated valet driving. Accordingly, the embodiments have an effect of increasing efficiency of a charging service provided by the EV charging station since a return time of the ADS vehicle may be advanced.

The embodiments related to a method of exchanging data with the EV charging station using the AVDS.

The embodiments relate to international standards ISO 23374-1 (AVPS) and ISO 12768-1 (AVDS). The embodiments relate to an automated valet parking system (hereinafter referred to as "AVPS") or an automated valet driving system (hereinafter referred to as "AVDS"). The embodiments provide a method and apparatus in which the ADS vehicle (used as the same concept as a standard "subject vehicle (SV)") is autonomously driven from a parking position to an EV charging station and charged with electricity and returns back to the parking position or is headed to another position through autonomous driving after completion of charging.

The current international standard ISO 23374-1 or ISO 12768-1 fails to define data exchanged between the AVPS or the AVDS and the EV charging station. Therefore, the embodiments provide data exchanged between the AVPS or the AVDS and the EV charging station to achieve efficient and safe automated valet driving. Hereinafter, a description will be given of data used for mutual communication between the AVDS and the EV charging station according to embodiments. As a result, the embodiments have an effect of providing an efficient communication data protocol between the AVDS and the EV charging station.

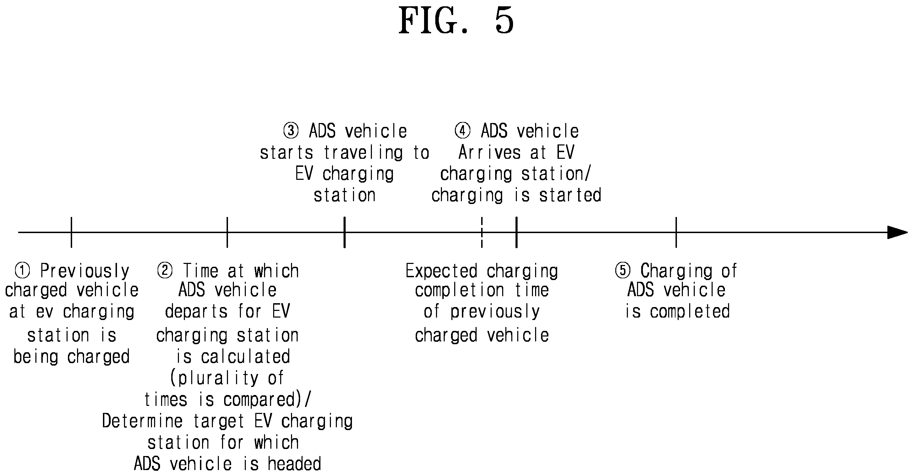

FIG. 5 illustrates a timeline of traveling of an AVDS vehicle to an EV charging station according to embodiments.

FIG. 5 illustrate in detail a method of performing the basic flow of the AVDS of FIG. 1. A driver of FIG. 5 corresponds to the user of FIG. 1, the UF and the UB of FIG. 2, etc. An ADS vehicle of FIG. 5 is a vehicle equipped with the AVDS, the AVDS corresponds to the system of FIG. 1, the OS, the OB, and the RO of FIG. 2, the processor of FIG. 3, etc., and the vehicle corresponds to the VB and the VO of FIG. 2, the processor of FIG. 3, the vehicle of FIG. 4, etc.

When a previously charged vehicle at the charging station (for example, the EV charging station) is being charged (step 1), the AVDS of the method/apparatus according to embodiments may start in advance traveling of the AVD vehicle to the charging station before charging of the previously charged vehicle is completed (step 3). When traveling of the ADS vehicle to the charging station is started in advance, the AVDS of the method/apparatus according to embodiments may determine a traveling start time of the ADS vehicle (described in detail below) based on an expected charging completion time of the previously charged vehicle.

The AVDS of the method/apparatus according to embodiments may determine a charging station (hereinafter, target charging station), which is a traveling destination of the ADS vehicle, from at least one charging station (step 2). The AVDS of the method/apparatus according to embodiments may receive information according to embodiments from the at least one charging station. The AVDS of the method/apparatus according to embodiments may calculate a reference value according to embodiments based on the information, and may determine a target charging station among the at least one charging station based on the reference value. In this instance, the at least one charging station may be all charging stations located within a certain distance from the ADS vehicle or all charging stations located in a specific facility (for example, an airport, a rental car company site, etc.).

In addition, the AVDS of the method/apparatus according to embodiments may request information according to embodiments from the at least one charging station upon receiving an EV charging reservation request from a user (or driver). Further, the AVDS may receive information from the at least one charging station receiving the request.

The information according to embodiments is as follows.

The information received by the AVDS of the method/apparatus according to embodiments from the at least one charging station may be charging progress or reservation status information of each charging station. For example, the information according to embodiments may include at least one selected from the group consisting of information on expected charging completion times of vehicles currently being charged or reserved for charging at each charging station, information on whether the AVDS is used for these vehicles, provided EV charging type information (for example, AC/DC, AC 5-pin type, etc.), charging rate information, and/or charging time information.

The reference value according to embodiments is as follows.

The AVDS of the method/apparatus according to embodiments may calculate the reference value based on the information received from at least one charging station, and determine a target charging station among the at least one charging station based on the reference value. For example, the reference value according to embodiments may include at least one selected from the group consisting of an expected return time of the ADS vehicle for each charging station, an expected rate upon completion of charging, and/or an expected time at which the ADS vehicle arrives at the charging station. In other words, the AVDS of the method/apparatus according to embodiments may determine the target charging station for the at least one charging station based on the reference value. For example, when the expected return time of the ADS vehicle for each charging station is greater than or equal to a reference value, the AVDS may determine a charging station that may return at an earlier time as the target charging station.

In this instance, the expected return time of the ADS vehicle is as follows.

The expected return time of the ADS vehicle may be calculated based on at least one selected from the group consisting of a time at which the ADS vehicle arrives at the target charging station, an expected time required for charging the ADS vehicle, and/or an expected time required for return of the ADS vehicle. In this instance, the time at which the ADS vehicle arrives at the target charging station may be the charging completion time of the previously charged vehicle or may be before the charging completion time of the previously charged vehicle, as will be described later. In addition, the expected time required for return of the ADS vehicle may be extracted based on traffic information in the corresponding timeslot.

The expected return time of the ADS vehicle may be calculated additionally based on a time taken for the previously charged vehicle to vacate an EV charging slot (hereinafter, charging area). More specifically, when the previously charged vehicle is the AVDS vehicle, the vehicle immediately moves, and thus it is preferable to additionally consider a time required to vacate the EV charging slot when the previously charged vehicle is a non-AVDS vehicle.

When the previously charged vehicle is the non-AVDS vehicle, it is possible to assume that the previously charged vehicle vacates the EV charging slot after a certain time. In this instance, the certain time may be an average value of data stored by the target charging station (for example, a time previously taken for non-AVDS vehicles to vacate the charging slot) or an average value of data for a specific vehicle type stored by the target charging station.

In addition, when the previously charged vehicle is the non-AVDS vehicle, the AVDS of the method/apparatus according to embodiments may exclude a charging station where the previously charged vehicle is located from the target charging station. In other words, when the AVDS determines that the previously charged vehicle located at the target charging station corresponds to a non-AVDS vehicle, the charging station may be excluded from the target charging station and a new target charging station may be determined again.

In addition, the AVDS of the method/apparatus according to embodiments may determine the target charging station based on the priority set in advance by the user (or driver). In this instance, the priority may be, but is not limited to, an expected rate upon completion of charging, a brand of each charging station, or an illuminance value when the ADS vehicle is moving.

For example, when the priority is an expected rate upon completion of charging, the AVDS may receive information only from charging stations corresponding to a rate range preset by the user (or driver) based on the rate rage to determine a target charging station therefrom, or calculate an expected return time of the ADS vehicle only for charging stations corresponding to the rate range to determine a target charging station. In other words, a final target charging station may be determined among charging stations corresponding to the rate range.

For example, when the priority is a brand for a specific charging station, the AVDS may receive information only from charging stations corresponding to a specific charging station brand preset by the user (or driver) due to various benefits (for example, card company linkage, etc.) based on the specific charging station brand to determine a target charging station therefrom, or calculate an expected return time of the ADS vehicle only for charging stations corresponding to this specific charging station brand to determine a target charging station. In other words, it is possible to determine a final target charging station among charging stations corresponding to a specific brand.

For example, when the priority is an illuminance value when the AVDS vehicle moves, the AVDS may exclude, from target charging stations, charging stations causing traveling at the illuminance value or less based the illuminance value preset by the user (or driver). In other words, when the user (or driver) sets the ADS vehicle not to travel at an illumination level less than or equal to a certain threshold, the AVDS may exclude charging stations causing traveling at an illumination level less than or equal to the threshold from target charging stations.

As described above, when traveling of the ADS vehicle to the charging station is started in advance, the AVDS of the method/apparatus according to embodiments may determine a traveling start time of the ADS vehicle based on the expected charging completion time of the previously charged vehicle.

The traveling start time may be derived based on an expected charging completion time of the previously charged vehicle calculated by the target charging station, a distance from a current location of the ADS vehicle to the target charging station calculated by the AVDS, and an expected average traveling speed or a maximum limit speed of the ADS vehicle calculated by the AVDS. More specifically, the traveling start time may be derived from a process of calculating the expected return time of the ADS vehicle described above.

In addition, the expected charging completion time of the previously charged vehicle, which is a basis for deriving the traveling start time, may be an expected charging completion time when charging of the previously charged vehicle is expected to be completed, or may be an earlier time. In other words, in the case of deriving the traveling start time of the ADS vehicle, when the arrival time is assumed to be a time when charging of the previous charging vehicle is completed, the traveling start time may be derived based on the expected charging completion time of the previous charging vehicle, and when the arrival time is assumed to be a time before completion of charging of the previously charged vehicle, the traveling start time may be derived based on a time which is a specific time earlier than the expected charging completion time of the previously charged vehicle.

Upon determining that the traveling start time is reached, the AVDS of the method/apparatus according to embodiments may drive the AVD vehicle to the target charging station (step 3). When the AVD vehicle arrives at (an operation zone or an ODD area of) the target charging station, the AVDS of the method/apparatus according to embodiments may transmit arrival information to the target charging station (step 4). The arrival information may include at least one selected from the group consisting of vehicle type information of the ADS vehicle, arrival time information at (the operation zone or the ODD area of) the target charging station of the ADS vehicle, and/or EV charging type information of the ADS vehicle.

In addition, the AVDS of the method/apparatus according to embodiments may drive the ADS vehicle to a waiting parking area when the ADS vehicle arrives at the target charging station before charging of the previously charged vehicle is completed, and may drive the ADS vehicle to a charging area when the ADS vehicle arrives at the target charging station after charging of the previously charged vehicle is completed.

In other words, when the AVDS drives the ADS vehicle in advance based on the expected charging completion time of the previously charged vehicle, the ADS vehicle may arrive at the target charging station i) before the charging completion time of the previously charged vehicle or ii) at or after the charging completion time of the previously charged vehicle. When the AVDS drives the ADS vehicle in advance based on a time earlier than the expected charging completion time of the previously charged vehicle, the ADS vehicle may be able to arrive at the target charging station i) before the charging completion time of the previously charged vehicle in most cases. Therefore, when the ADS vehicle arrives at the target charging station i) before the charging completion time of the previously charged vehicle, the ADS vehicle may be driven to the waiting parking area of the target charging station, and when the ADS vehicle arrives at the target charging station ii) at or after the charging completion time of the previously charged vehicle, the ADS vehicle may be driven to a charging area (EV charging slot, etc.) of the target charging station.

In addition, when the ADS vehicle is located at the waiting parking area at the charging completion time of the previously charged vehicle, the AVDS of the method/apparatus according to embodiments may move the ADS vehicle from the waiting parking area to the charging area. Upon determining that the ADS vehicle is out of the waiting parking area, the AVDS of the method/apparatus according to embodiments may transmit escape information to the target charging station. In this instance, the escape information may include at least one selected from the group consisting of an identification ID of the waiting parking area (for example, coded marker, identification umber, identification letter, etc.), a waiting parking area entry time of the ADS vehicle, and/or a target charging station management number of the ADS vehicle (identification number when an identification number of the ADS vehicle is assigned when entering the target charging station).

In addition, upon determining that the ADS vehicle is entering the charging area, the AVDS of the method/apparatus according to embodiments may transmit entry information to the target charging station. In this instance, the entry information may include at least one selected from the group consisting of an identification ID of the charging area (for example, coded marker, identification number, identification letter, etc.), a charging area entry time of the ADS vehicle, and/or a target charging station management number of the ADS vehicle (identification number when an identification number of the ADS vehicle is assigned when entering the target charging station). When charging of the ADS vehicle is completed, the AVDS of the method/apparatus according to embodiments may proceed with payment and return the ADS vehicle to an original location (step 5).

The charging area of the charging station may provide, for example, AC type, DC-combo type, magnetic induction type, or magnetic resonance type charging.

An AC type connector may be at least one of AC 5-pin or AC 7-pin. A DC-combo type connector may be at least one of combo 5-pin, combo 7-pin, or DC only (CHAdeMO).

Referring to FIG. 2, the automated valet driving method and device according to embodiments may be performed by an AVDS/server/processor such as the OS, the OB, the RO, etc. In addition, the method and device may be performed by a vehicle (on-board)/processor such as the VB and the VO. In addition, the method and device may be performed by a user interface (smartphone) such as the UF or the UB.

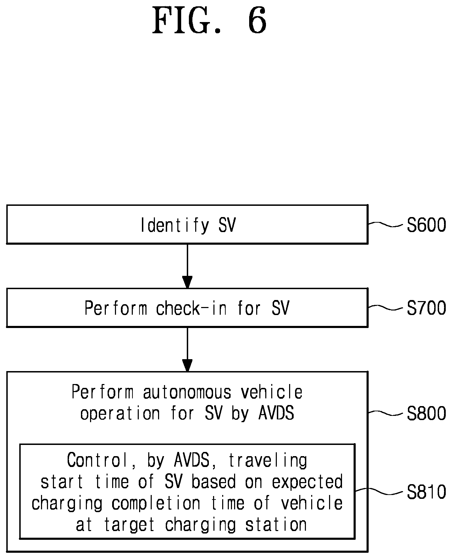

FIG. 6 illustrates an automated valet driving method according to embodiments.

FIG. 6 illustrates a method of performing automated valet driving based on a timeline as in FIG. 5 by the AVDS/server/processor of FIGs. 1 and 2, the processor of FIG. 3, the vehicle of FIG. 4, the autonomous driving controller of the vehicle of FIG. 4, etc.

The automated valet driving method according to the embodiments may include a step S600 of identifying an SV.

The automated valet driving method according to the embodiments may further include a step S700 of performing check-in for the SV.

The automated valet driving method according to the embodiments may further include a step S800 of performing an autonomous vehicle operation for the SV by the AVDS.

The step S800 of performing an autonomous vehicle operation for the SV may include a step S810 of controlling, by the AVDS, a traveling start time of the SV based on an expected charging completion time of the vehicle at the target charging station.

Referring to FIG. 6, the automated valet driving method may include a step S600 of identifying an SV, a step S700 of performing check-in for the SV, and a step S800 of performing an autonomous vehicle operation for the SV by the AVDS, and the step S800 of performing the autonomous vehicle operation for the SV by the AVDS may include a step S810 of controlling, by the AVDS, a traveling start time of the SV based on an expected charging completion time of the vehicle at the target charging station.

Hereinafter, a detailed description will be given of the step S800 of performing the autonomous vehicle operation for the SV by the AVDS.

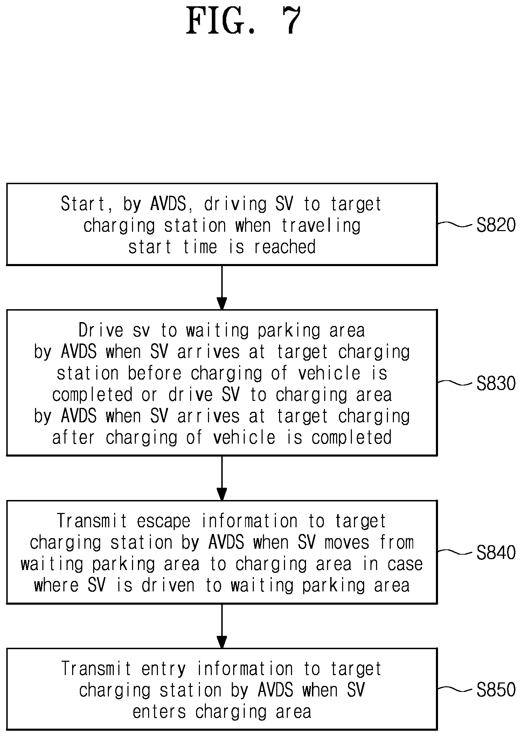

FIG. 7 illustrates an automated valet driving method according to other embodiments.

More specifically, FIG. 7 illustrates the step S800 of performing the autonomous vehicle operation for the SV in the automated valet driving method according to the embodiments of FIG. 6.

The step S800 of performing the autonomous vehicle operation for the SV may further include a step S820 of starting to drive the SV to the target charging station by the AVDS in response to the traveling start time being reached.

The step S800 of performing the autonomous vehicle operation for the SV may further include a step S830 of driving the SV to the waiting parking area by the AVDS when the SV arrives at the target charging station before charging of the vehicle is completed or driving the SV to the charging area by the AVDS when the SV arrives at the target charging station after charging of the vehicle is completed.

The step S800 of performing the autonomous vehicle operation for the SV may further include a step S840 of transmitting escape information to the target charging station by the AVDS when the SV moves from the waiting parking area to the charging area in the case where the SV is driven to the waiting parking area.

The step S800 of performing the autonomous vehicle operation for the SV may further include a step S850 of transmitting entry information to the target charging station by the AVDS when the SV enters the charging area.

Referring to FIG. 7, the step S800 of performing the autonomous vehicle operation for the SV may further include the step S820 of starting to drive the SV to the target charging station by the AVDS in response to the traveling start time being reached, and the traveling start time may be derived by the ADS based on an expected charging completion time or a time before the expected charging completion time.

The step S800 of performing the autonomous vehicle operation for the SV may further include the step S830 of driving the SV to the waiting parking area by the AVDS when the SV arrives at the target charging station before charging of the vehicle is completed or driving the SV to the charging area by the AVDS when the SV arrives at the target charging station after charging of the vehicle is completed.

The step S800 of performing the autonomous vehicle operation for the SV may further include the step S840 of transmitting escape information to the target charging station by the AVDS when the SV moves from the waiting parking area to the charging area in the case where the SV is driven to the waiting parking area, and the escape information may include at least one of an identification ID of the waiting parking area, a time at which the SV enters the waiting parking area, or a target charging station management number of the SV.

The step S800 of performing the autonomous vehicle operation for the SV may further include the step S850 of transmitting entry information to the target charging station by the AVDS when the SV enters the charging area, and the entry information may include at least one of an identification ID of the charging area, a time at which the SV enters the charging area, or a target charging station management number of the SV.

Hereinafter, a detailed description will be given of the step S810 of controlling the traveling start time of the SV.

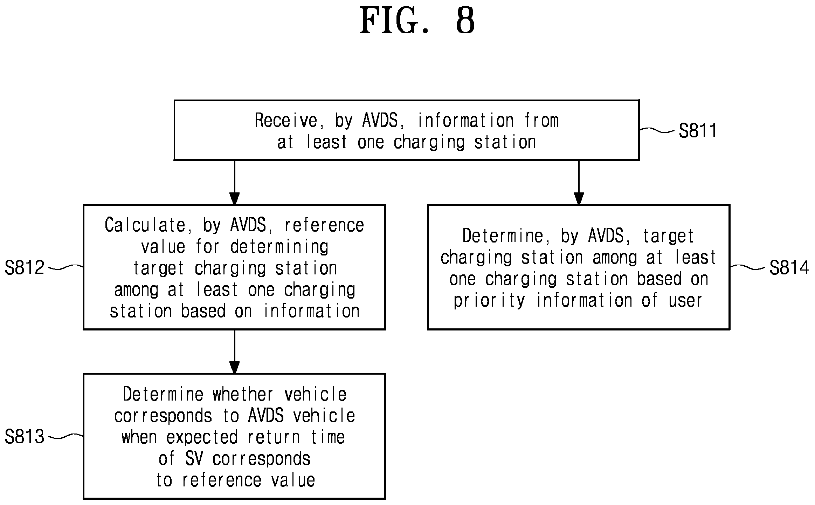

FIG. 8 illustrates an automated valet driving method according to still other embodiments.

More specifically, FIG. 8 illustrates the step S810 of controlling the traveling start time of the SV in the automated valet driving method according to the embodiments of FIG. 7.

The step S810 of controlling the traveling start time of the SV may include a step S811 of receiving, by the AVDS, information from the at least one charging station.

The step S810 of controlling the traveling start time of the SV may include a step S812 of calculating, by the AVDS, a reference value for determining a target charging station among the at least one charging station based on the information.

The step S810 of controlling the traveling start time of the SV may include a step S813 of determining whether the vehicle corresponds to the AVDS vehicle when the expected return time of the SV corresponds to a reference value.

The step S810 of controlling the traveling start time of the SV may include a step S814 of determining, by the AVDS, a target charging station among the at least one charging station based on priority information of the user.

Referring to FIG. 8, the step S810 of controlling the traveling start time of the SV may include the step S811 of receiving, by the AVDS, information from the at least one charging station, and the information may include at least one of charging time information, charging rate information, charging type information, or AVDS usage information of vehicles being charged or reversed for charging at the at least one charging station.

The at least one charging station may include at least one of at least one charging station located within a certain distance from the SV or at least one charging station located in a specific facility.

The step S810 of controlling the traveling start time of the SV may further include the step S812 of calculating, by the AVDS, a reference value for determining a target charging station among the at least one charging station based on the information, and the reference value may be at least one of an expected return time of the SV, an expected charging rate of the SV, or an expected time at which the SV arrives at the at least one charging station.

The step S810 of controlling the traveling start time of the SV may further include the step S813 of determining whether the vehicle corresponds to the AVDS vehicle when the expected return time of the SV corresponds to a reference value. When the vehicle corresponds to the AVDS vehicle, the AVDS may derive an expected return time of the SV based on at least one of a time at which the SV arrives at the target charging station, an expected charging time of the SV, or a return time of the SV. Alternatively, when the vehicle does not correspond to the AVDS vehicle, the AVDS derives the expected return time of the SV additionally based on a specific time required after charging of the vehicle is completed, and the specific time may be one of an average value of data stored by the target charging station or an average value of specific vehicle type data stored by the target charging station.

Alternatively, when the vehicle does not correspond to the AVDS vehicle, the AVDS may determine any one of the at least one charging station excluding the target charging station as a new target charging station. In other words, when the vehicle is a non-AVDS vehicle, the charging station where the vehicle is located may be excluded from the target charging station. In other words, upon determining that the vehicle located at the target charging station is a non-AVDS vehicle, the charging station may be excluded from the target charging station and a new target charging station may be determined again.

The step S810 of controlling the traveling start time of the SV may further include the step S814 of determining, by the AVDS, a target charging station among the at least one charging station based on priority information of the user, and the priority information may be one of charging rate information, brand information of the charging station, or illuminance information when the SV moves.

The automated valet driving method is performed by an automated valet driving device. Referring to FIGs. 2 and 3, the device includes a memory and a processor connected to the memory, and the processor may identify an SV, perform check-in for the SV, perform an autonomous vehicle operation for the SV by the AVDS, and control a traveling start time of the SV based on an expected charging completion time of the vehicle at the target charging station.

Referring to FIG. 4, a vehicle controlled by automated valet driving according to embodiments includes an interface configured to exchange information with the AVDS, and a controller configured to control automated valet driving, and the controller may identify an SV, perform check-in for the SV, perform an autonomous vehicle operation for the SV by the AVDS, and control a traveling start time of the SV based on an expected charging completion time of the vehicle at the target charging station. That is, traveling of the vehicle may be controlled based on the traveling start time determined by the AVDS.

Due to the embodiments, it is possible to efficiently define the expected charging completion time of the previously charged vehicle at the EV charging station. There is an effect of being able to advance the return time of the ADS vehicle by sending the ADS vehicle to the EV charging station before charging of the previously charged vehicle is completed based on this expected charging completion time.

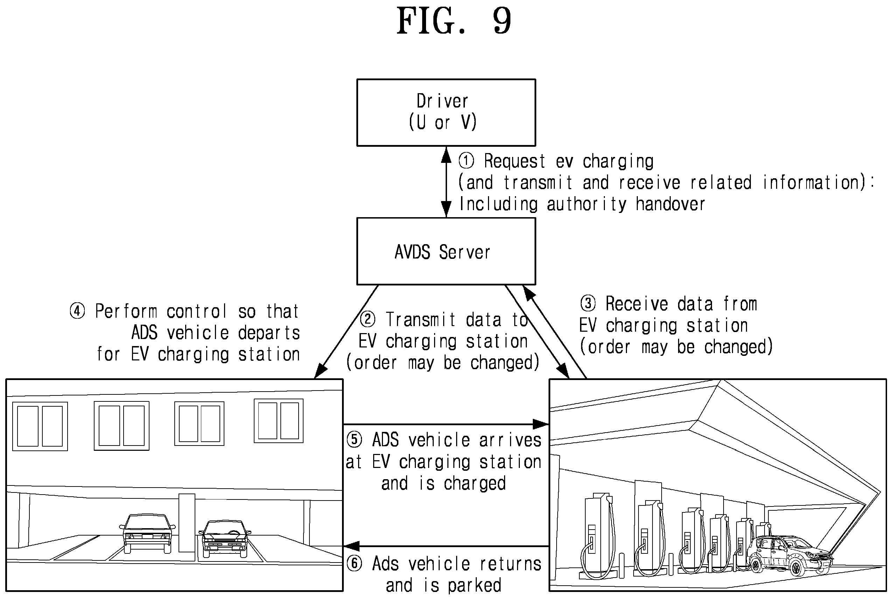

FIG. 9 illustrates an EV charging station based on the AVDS according to embodiments.

FIG. 9 illustrates in detail the system structure of FIG. 2 associated with the method and apparatus for performing the basic flow of the AVDS of FIG. 1. A driver of FIG. 9 corresponds to the user of FIG. 1, the UF and UB of FIG. 2, etc. The AVDS (server) of FIG. 9 corresponds to the system of FIG. 1, the OS, the OB, and the RO of FIG. 2, the processor of FIG. 3, etc. The vehicle of FIG. 9 corresponds to the VB and the VO of FIG. 2, the processor of FIG. 3, the vehicle of FIG. 4, etc.

The system of FIG. 9 includes a user, an AVDS system (for example, a server), a parking area, and/or a charging station.

The AVDS of the method/apparatus according to embodiments may receive an EV charging request from the user (or driver) (step 1). The AVDS of the method/apparatus according to embodiments may receive EV charging-related information from the user. The AVDS of the method/apparatus according to embodiments may request the EV charging-related information from the user, and receive a response. The AVDS of the method/apparatus according to embodiments may receive authority (handover) from the user.

The AVDS of the method/apparatus according to embodiments may transmit data (described in detail below) according to embodiments to the charging station (for example, EV charging station) (step 2). The AVDS of the method/apparatus according to embodiments may receive data from the charging station (step 3). Data transmitted and received between the charging station and the AVDS of the method/apparatus according to embodiments may include EV-related information and/or AVDS information.

The AVDS of the method/apparatus according to embodiments may control the ADS vehicle so that the ADS vehicle departs for the EV charging station (step 4). The vehicle may autonomously move from the parking area to the charging station area under the control of the AVDS of the method/apparatus according to embodiments. Under the control of the AVDS of the method/apparatus according to embodiments, the ADS vehicle may arrive at the EV charging station and start charging (step 5). When charging of the ADS vehicle is completed, the ADS vehicle may return to the parking area and perform autonomous parking under the control of the AVDS of the method/apparatus according to embodiments (step 6). The order of steps 2 and 3 may be varied. Furthermore, the order of steps 1 to 6 is an example, and detailed step operations may be changed according to an AVDS procedure.

Data transmitted and received between the AVDS and the EV charging station according to embodiments is as follows.

When allowing the ADS vehicle to use the EV charging station based on the AVDS, the AVDS needs to exchange key data with the EV charging station through mutual communication. "Transmitting data to the EV charging station (step 2)" and "receiving data from the EV charging station (step 3)" correspond thereto. Embodiments include a data system in which the AVDS and the EV charging station communicate with each other.

The method/apparatus according to embodiments includes a step of transmitting data by the AVDS. For example, this is an example of performing step 2 first.

The data transmitted by the AVDS to the EV charging station (data transmission to the EV charging station, step 2) includes the following.

As data transmission, the AVDS may transmit information including at least one of ADS vehicle information, EV charging reservation information, ADS vehicle departure information, or payment schedule type information to the EV charging station.

As a data request, the AVDS may generate information including at least one of an EV charging type provision availability information request, an EV charging reservation availability information request, or an EV charging rate information request, and transmit the information to the EV charging station.

Data transmitted by the EV charging station to the AVDS (receiving data from the EV charging station, step 3) includes the following.

As data transmission (respond), the AVDS may receive information including at least one of EV charging type provision availability information, EV charging reservation availability information, or EV charging rate information from the EV charging station.

The method/apparatus according to embodiments includes a step of transmitting data to the AVDS by the EV charging station. For example, this is an example of performing step 3 first. For example, the data transmission process of the EV charging station may be periodically performed.

Data transmitted by the EV charging station to the AVDS (receiving data from the EV charging station, step 2) includes the following.

As data transmission, the AVDS may receive data including at least one of (currently) available EV charging type information, EV charging reservation status information, or EV charging rate information from the EV charging station.

The data transmitted by the AVDS to the EV charging station (data transmission to the EV charging station, step 2) includes the following.

As data transmission (confirmation), the AVDS may generate data including at least one of ADS vehicle information, EV charging reservation confirmation information, expected ADS vehicle arrival time information, or payment method information/payment information and transmit the data to the EV charging station.

The apparatus/method according to embodiments, for example, the AVDS (see FIGs. 1 and 2) or the AVDS according to the processor (see FIG. 3) configured to control the AVDS may transmit data first. In other words, the data transmitted by the AVDS to the EV charging station (data transmission to the EV charging station, step 2) is as follows.

Hereinafter, a case in which AVDS transmits data first will be described.

The data transmitted by the AVDS to the EV charging station (data transmission to the EV charging station, step 2) is as follows.

ADS vehicle information according to embodiments is as follows.

For example, the ADS vehicle information may selectively include at least one selected from the group consisting of vehicle type information, vehicle size information (optional), EV charging type information available to the ADS vehicle, or EV charging pass (whether prepaid or not) information for the ADS vehicle.

The vehicle type information may include at least one selected from the group consisting of ADS vehicle manufacturer information, vehicle model information, or vehicle year information.

The vehicle size information may not be necessarily signaled since the vehicle size may be derived based on the vehicle type information according to embodiments. However, depending on the case, the vehicle size information may be necessary, and thus embodiments do not exclude an example in which the vehicle size information is included in the ADS vehicle information. The vehicle size information according to embodiments may include, for example, at least one selected from the group consisting of vehicle length (frontmost and rearmost lengths of the vehicle) information, vehicle width (left-right width of the vehicle) information, or vehicle height (ground-vehicle top height) information.

For example, the EV charging type information available to the ADS vehicle may include at least one selected from the group consisting of conductive charging/inductive charging instruction information, AC type/DC-combo type instruction information during conductive charging, connection plug instruction information in the AC type, connection plug instruction in the DC-combo type, and detailed charging type instruction information during inductive charging (for example, a magnetic induction method and a magnetic resonance method).

The EV charging pass (whether prepaid or not) information for the ADS vehicle may include at least one selected from the group consisting of information indicating whether to hold an EV charging pass, an EV charging pass target (for example, Company H EV charging pass, etc.), and a pass type (for example, fast/slow charging voucher, conductive/inductive charging voucher, AC/DC charging voucher, etc.).

A data structure of the ADS vehicle information according to embodiments is as follows.

| ADS vehicle information | | | |
|---|---|---|---|
| Data item | Range | | Description |
| Vehicle type information | | 1. ADS vehicle manufacturer information | To specify the current condition of the ADS vehicle |
| | | 2. Vehicle model name | |
| | | 3. Vehicle model year | |
| Vehicle size information | | 1. Length | Optional. Can be derived by the vehicle type information in most cases |
| | | 2. Width | |
| | | 3. Height | |
| EV charging type available to the ADS vehicle | To be described in the next slide | | |
| EV charging season ticket (pre-payment) information | | 1. Information indicating whether the right exist | Periodical update needed |
| | | 2. Information on where to use the right | |
| | | 3. Type of the right | |

A data structure of the EV charging type information available to the ADS vehicle is as follows.

| EV charging type available to the ADS vehicle | | | | |
|---|---|---|---|---|
| Data item | | | Range | Description |
| EV charging type (conductive/inductive) | | | 1. Conductive | |
| | | | 2. Inductive | |
| | | | 3. Both | |
| 1/3 | Further classification below conductive type | | 1. AC type | The range can be substituted by |
| | | | 2. DC-combo type | <1. fast charging / 2. slow charging> |
| 1/3 | 1 | Further classification below AC type (see IEC 62196-2) | 1. AC 5-pin | Represent connection plugs for the AC type |
| | | | 2. AC 7-pin | |
| 1/3 | 2 | Further classification below DC-combo type (see IEC 62196-3) | 1. Combo 5-pin | Represent connection plugs for the DC-combo type |
| | | | 2. Combo 7-pin | |
| | | | 3. DC only (CHAdeMO) | |
| 2/3 | Further classification below inductive type | 1. Magnetic induction | | |
| | | 2. Magnetic resonance | | |

Depending on embodiments, data signaling of lower-level data not selected from upper-level data (for example, when the EV charging type is determined to be conductive, inductive is not selected) may be omitted (for example, null), or data indicating not being selected (for example, 3. No need to determine) may be signaled.

EV charging reservation information according to embodiments is as follows.

The EV charging reservation information relates to desired reservation time (range) information of the driver (user), and may only include i) desired reservation time (range) information in a first example or may include at least one selected from the group consisting of charging type priority information and desired reservation time (range) information for each priority in a second example.

In the first example, the desired reservation time (range) information may include start time information and end time information of a desired time range.

In the second example, for example, the charging type priority information may include Conductive-AC type-AC 5 pin as first priority, Inductive-Magnetic induction as second priority, and Conductive-DC type-combo 5 pin as third priority (that is, according to user preference, a charging time, etc.). For example, the desired reservation time (range) information for each priority may include an A time range as first priority, a B time range as second priority, and a C time range as third priority (here, A time range ⊃ B time range ⊃ C time range).

The ADS vehicle departure information according to embodiments is as follows.

The ADS vehicle departure information may include information on a time at which the ADS vehicle may depart (and information on a departure location of the ADS vehicle).

The payment schedule type information according to embodiments is as follows.

The payment schedule type information may indicate the means of paying for EV charging costs. Examples of a payment method may include EV-based payment (for example, ETCS, UWB payment, vehicle license plate recognition payment, etc.), credit card, various SNS pay (for example, N Pay, etc.), etc.

The method/apparatus according to embodiments may request the EV charging type provision availability information.

The EV charging type provision availability information indicates information on whether the EV charging station provides an EV charging type applicable to the ADS vehicle.

As a first example, Y (yes) may be signaled when at least one EV charging type is provided, and N (no) may be signaled when none is provided.

As a second example, all applicable EV charging types may be included (for example, signaling that Conductive AC 5 pin and Inductive Magnetic Induction may be applied to the ADS vehicle).

The method/apparatus according to embodiments may request the EV charging reservation availability information.

With regard to the first example of the above-described EV charging reservation information, the EV charging reservation availability information may include Y when reservation is possible in the desired time range, and N when reservation is impossible in the desired time range.

With regard to the second example of the above-described EV charging reservation information, the EV charging reservation availability information may include at least one selected from the group consisting of first priority reservation availability information, second priority reservation availability information, and third priority reservation availability information.

The method/apparatus according to embodiments may request EV charging rate information.

The EV charging rate information may indicate, for example, a charging rate per 1 kWh.

An example of data collection transmitted by the AVDS to the EV charging station (excluding ADS vehicle information) is as follows.

| ADS vehicle information | | | |
|---|---|---|---|
| Data item | Range | | Description |
| EV charging reservation information | | 1. Start time point of desired reservation time range | Desired reservation time rage |
| | | 2. End time point of desired reservation time range | |
| ADS vehicle departure information | | 1. Time point when the ADS can depart | |
| | | 2. ADS vehicle departure location | |
| Expected payment type information | | 1. EV based payment | Can be varied according to standard payment type at each time |
| | | 2. Credit card | |
| | | 3. SNS pay | |
| EV charging type availability information request | | 1. Y | Alternatively, the range may include all available EV charging types |
| | | 2. N | |
| EV charging reservation availability request | | 1. Y | Indicate whether the reservation is available among the desired reservation time range. |
| | | 2. N | |
| EV charging rate information request | | 1. EV charging rate | For example, EV charging rate per 1 kWh |

In the case where the AVDS transmits data first, data transmitted by the EV charging station to the AVDS (data reception from the EV charging station, step 3) is as follows.

The method/apparatus according to embodiments may receive the EV charging type provision availability information.

The EV charging type provision availability information indicates information on whether the EV charging station provides an EV charging type applicable to the ADS vehicle.

As a first example, Y may be signaled when at least one EV charging type is provided, and N may be signaled when none is provided.

As a second example all applicable EV charging types may be included (for example, signaling that Conductive AC 5 pin and Inductive Magnetic Induction may be applied to the ADS vehicle).

The method/apparatus according to embodiments may receive the EV charging reservation availability information.

With regard to the first example of the above-described EV charging reservation information, the EV charging reservation availability information may include Y when reservation is possible in the desired time range, and N when reservation is impossible in the desired time range.

With regard to the second example of the above-described EV charging reservation information, the EV charging reservation availability information may include at least one selected from the group consisting of first priority reservation availability information, second priority reservation availability information, and third priority reservation availability information.

The method/apparatus according to embodiments may receive EV charging rate information.

The EV charging rate information may indicate, for example, a charging rate per 1 kWh.

Hereinafter, a description will be given of the case in which the EV charging station transmits data first (or periodically).

The data transmitted by the EV charging station to the AVDS (data reception from the EV charging station, step 3) is as follows.

(Currently) available EV charging type information according to embodiments is as follows.

The (currently) available EV charging type information may include all EV charging types that may be currently provided by the EV charging station (for example, signaling that Conductive AC 5 pin and Inductive Magnetic Induction may be provided).

EV charging reservation status information according to embodiments is as follows.

The EV charging reservation status information represents information including a reservation status by time of EV chargers at the EV charging station.

EV charging rate information according to embodiments is as follows.

The EV charging rate information may indicate, for example, a charging rate per 1 kWh.

In the case where the EV charging station transmits data first (or periodically), data transmitted by the AVDS to the EV charging station (data transmission to the EV charging station, step 2) is as follows.

EV charging reservation confirmation information according to embodiments is as follows.

The EV charging reservation confirmation information may include at least one selected from the group consisting of a confirmation/non-confirmation indication flag (Y/N), selected EV charging type information, and selected reservation slot information.

Expected arrival time information of the ADS vehicle according to embodiments is as follows.

The expected arrival time information of the ADS vehicle indicates time information that the AVDS expects the ADS to arrive at the EV charging station.

The AVDS may calculate an expected arrival time of the ADS vehicle using a navigation function, based on departure time information and a departure location of the ADS vehicle.

Payment method information/payment information according to embodiments is as follows.

The payment method information may indicate a confirmed payment method used for payment or pre-payment after the driver (user) arrives at the EV charging station and charges the EV.

The payment information may indicate information (for example, ID information, credit card number, vehicle license plate number, etc.) required for payment using the above payment method.

The ADS vehicle information according to embodiments is understood with reference to the ADS vehicle information, the data structure of the ADS vehicle information, and/or the data structure of the EV charging type information available to the ADS vehicle.

Referring to FIG. 2, the automated valet driving method and device according to embodiments may be performed by the AVDS/server/processor such as the OS, the OB, the RO, etc. In addition, the automated valet driving method and device may be performed by a vehicle (on-board)/processors such as the VB and the VO. In addition, the automated valet driving method and device may be performed by a user interface (smartphone) such as the UF or the UB.

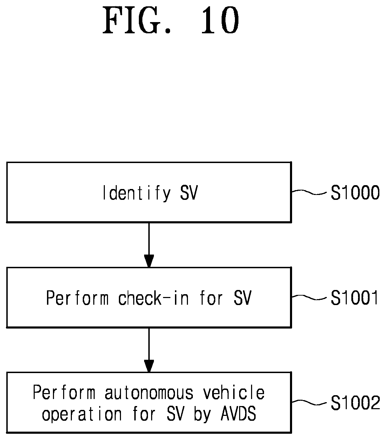

FIG. 10 illustrates an automated valet driving method according to embodiments.

FIG. 10 illustrates a method of performing automated valet driving according to embodiments by the AVDS/server/processor of FIGs. 1 and 2, the processor of FIG. 3, the vehicle of FIG. 4, an AVDS server of FIG. 9, etc.

The automated valet driving method according to embodiments may include a step S1000 of identifying an SV.

The automated valet driving method according to embodiments may further include a step S1001 of performing check-in for the SV.

The automated valet driving method according to embodiments may further include a step S1002 of performing an autonomous vehicle operation for the SV by the AVDS. To perform the autonomous vehicle operation, data according to embodiments is exchanged between the AVDS and the charging station.

Referring to FIG. 10, the automated valet driving method includes a step of identifying an SV, a step of performing check-in for the SV, and a step of performing an autonomous vehicle operation for the SV by the AVDS, and data for the autonomous vehicle operation may be transmitted and received by the AVDS.

In the case where the AVDS transmits data first, with regard to data transmitted by the AVDS to the EV charging station (data transmission to the EV charging station), the data transmitted by AVDS may include at least one of vehicle information for SV, charging reservation information, vehicle departure information, payment schedule type information, charging type availability information, charging reservation availability information, or charging rate information. The term "signal" may refer to data, information, etc. A step of transmitting and receiving a signal between the AVDS and the charging station describe the case where the AVDS transmits data (signals) first.

In the case where the AVDS transmits data first, with regard to data transmitted by the EV charging station to the AVDS (data reception from the EV charging station), the data received by AVDS may include at least one of charging type availability information, charging reservation availability information, or charging rate information. The term "signal" may separately refer to a first signal, a second signal, etc.

In the case where the EV charging station transmits data first (or periodically), with regard to data transmitted by the EV charging station to the AVDS (data reception from EV charging station), the data received by the AVDS may include at least one of currently available charging type information or charging rate information.

In the case where the EV charging station transmits data first (or periodically), with regard to data transmitted by the AVDS to the EV charging station (data transmission to the EV charging station), the data transmitted by the AVDS may include at least one of charging reservation confirmation information, expected vehicle arrival time information, payment method information, payment information, or vehicle information.

The automated valet driving method is performed by the automated valet driving device. Referring to FIGs. 2 and 3, the device includes a memory and a processor connected to the memory, the processor identifies an SV, performs check-in for the SV, and performs an autonomous vehicle operation for the SV by the AVDS, and data for the autonomous vehicle operation may be transmitted and received by the AVDS.

Referring to FIG. 4, the vehicle controlled by automated valet driving includes an interface configured to exchange information with the AVDS, and a controller configured to control automated valet driving (for example, the controller 600 of FIG. 4), the controller performs an autonomous vehicle operation for the SV by the AVDS, and automated valet driving may be performed based on data transmitted and received by the AVDS. That is, the vehicle may be controlled according to information and control of the AVDS.

Upon driver request, the AVDS may automatically drive the vehicle from a publicly available drop-off area in a mixed traffic environment to a charging station. After a charging operation is completed, the vehicle may return to a parking space when the driver is not present.

Since travel to and from the charging station is a short distance and does not disturb other road users, a maximum speed is limited to 10 km/h.

In the case of conductive charging using a robot, the AVDS may park the vehicle at the charging station with a charging socket facing a charging plug of the robot. A vehicle direction needs to be less than ±5° relative to a center line of a marked charging area and an outline of the parked vehicle is completely within an inner boundary of the parking space marking.

In the case of inductive charging, the system may park the vehicle in a charging space with a horizontal distance of ±5 cm between a center of a stationary coil and a center of a coil of the vehicle protruding from a road surface. An outline of the parked vehicle is completely within an inner boundary of the parking space marking. Data according to embodiments, which is additional means of the charging station (for example, an additional sensor or communication of a charging current optimization procedure), is used for a maneuver to reach this tolerance.

Due to the embodiments, a communication data protocol between the AVDS and the EV charging station may be efficiently defined. There is an effect in which the user, the AVDS, the charging station, the vehicle, etc. may perform automated valet driving accurately, safely, quickly, and efficiently based on this protocol.

The embodiments have been described in terms of a method and/or an apparatus, and the description of the method and the description of the apparatus may be applied to complement each other.

For convenience of description, respective drawings have been separately described. However, a new embodiment may be implemented by merging embodiments described in the respective drawings. In addition, according to the needs of those skilled in the art, designing a computer-readable recording medium on which programs for executing the previously described embodiments are recorded also falls within the scope of the rights of the embodiments. The apparatus and method according to the embodiments are not limited to the configuration and method of the embodiments described above, and all or part of the embodiments may be selectively combined so that various modifications may be made. Even though preferred embodiments of the embodiments have been shown and described, the embodiments are not limited to specific embodiments described above. It is obvious that various modifications may be made by those skilled in the art without departing from the gist of the embodiments claimed in the claims, and these modifications should not be individually understood from the technical idea or outlook of the embodiments.

Various components of the apparatus of the embodiments may be implemented by hardware, software, firmware, or a combination thereof. Various components of the embodiments may be implemented using one chip, for example, one hardware circuit. Depending on the embodiments, the components according to the embodiments may be implemented using separate chips. Depending on the embodiments, at least one of the components of the apparatus according to the embodiments may include one or more processors capable of executing one or more programs, and the one or more programs may perform one or more of the operations/methods according to the embodiments or may include instructions for performing the operations/methods. Executable instructions for performing the methods/operations of the apparatus according to embodiments may be stored in a non-transitory CRM or other computer program products configured for execution by one or more processors, or may be stored in a transitory CRM or other computer program products configured for execution by one or more processors. In addition, the term memory according to embodiments may be used as a concept that includes not only a volatile memory (for example, a RAM, etc.) but also all of a nonvolatile memory, a flash memory, a PROM, etc. In addition, the memory may also be implemented in the form of a carrier wave, such as transmission over the Internet. In addition, a processor-readable recording medium is distributed in a computer system connected to a network, so that processor-readable code may be stored and executed in a distributed manner.

In this document, "/" and "," are interpreted as "and/or." For example, "A/B" is interpreted as "A and/or B", and "A, B" is interpreted as "A and/or B." Additionally, "A/B/C" means "at least one of A, B and/or C." In addition, "A, B, and C" also means "at least one of A, B and/or C." Additionally, in this document, "or" is interpreted as "and/or." For example, "A or B" may mean 1) only "A", 2) only "B", or 3) "A and B". In other words, "or" in this document may mean "additionally or alternatively."

Terms such as first, second, etc. may be used to describe various components of the embodiments. However, interpretation of various components according to embodiments should not be limited by the above terms. These terms are merely used to distinguish one component from another. For example, a first user input signal may be referred to as a second user input signal. Similarly, the second user input signal may be referred to as the first user input signal. Use of these terms should be interpreted without departing from the scope of the various embodiments. The first user input signal and the second user input signal are both user input signals, but do not mean the same user input signals unless clearly indicated in context.

The terminology used to describe the embodiments is for the purpose of describing specific embodiments and is not intended to limit the embodiments. As used in the description of the embodiments and the claims, the singular is intended to include the plural unless the context clearly dictates otherwise. The expression "and/or" is used in a sense that includes all possible combinations between terms. The expression "include" describes the presence of features, numbers, steps, elements, and/or components and does not imply the absence of additional features, numbers, steps, elements, and/or components. Conditional expressions such as "in the case where", "when", etc. used to describe the embodiments are not limited to optional cases. The conditional expressions are intended that, when a specific condition is satisfied, a relevant action is performed or a relevant definition is interpreted in response to the specific condition.

In addition, operations according to embodiments described in this document may be performed by a transmitting and receiving device including a memory and/or a processor depending on the embodiments. The memory may store programs for processing/controlling operations according to embodiments, and the processor may control various operations described in this document. The processor may be referred to as a controller, etc. In embodiments, operations may be performed by firmware, software, and/or a combination thereof, and the firmware, software, and/or combination thereof may be stored in a processor or stored in memory.

Meanwhile, operations according to the above-described embodiments may be performed by a transmitting device and/or a receiving device according to the embodiments. The transmitting and receiving device may include a transmitting and receiving unit that transmits and receives media data, a memory that stores instructions (program code, algorithm, flowchart and/or data) for the process according to embodiments, and a processor that controls the operations of the transmitting and receiving device.

The processor may be referred to as a controller, etc., and may correspond to, for example, hardware, software, and/or a combination thereof. Operations according to the above-described embodiments may be performed by the processor. In addition, the processor may be implemented as an encoder/decoder, etc. for the operations of the above-described embodiments.

As described above, the relevant content has been described in the best mode for carrying out the embodiments.

As described above, embodiments may be applied in whole or in part to the automated valet driving device and system.

The method/apparatus according to embodiments may efficiently perform automated valet driving of the vehicle.

The method/apparatus according to embodiments may safely perform automated valet driving of the vehicle.

The method/apparatus according to embodiments may accurately perform automated valet driving of the vehicle.

A person skilled in the art may make various changes or modifications to the embodiments within the scope of the embodiments.

The embodiments may include changes/variations without departing from the scope of the claims and equivalents thereto.

## Claims

1. An automated valet driving method comprising:
identifying a subject vehicle (SV);
performing check-in for the SV; and
performing an autonomous vehicle operation for the SV by an automated valet driving system (AVDS).

2. The automated valet driving method according to claim 1, wherein the performing an autonomous vehicle operation comprises controlling, by the AVDS, a traveling start time of the SV based on an expected charging completion time of a vehicle at a target charging station.

3. The automated valet driving method according to claim 2, wherein:
the controlling comprises:
receiving, by the AVDS, information from at least one charging station; and
calculating, by the AVDS, a reference value for determining the target charging station from among the at least one charging station based on the information,
the information comprises at least one of charging time information, charging rate information, charging type information, or AVDS usage information of vehicles being charged or reserved for charging at the at least one charging station, and
the reference value is at least one of an expected return time of the SV, an expected charging rate of the SV, or an expected time at which the SV arrives at the at least one charging station.

4. The automated valet driving method according to claim 3, wherein:
the controlling further comprises determining whether the vehicle corresponds to an AVDS vehicle when the expected return time of the SV corresponds to the reference value, and
when the vehicle corresponds to the AVDS vehicle, the AVDS derives the expected return time of the SV based on at least one of a time at which the SV arrives at the target charging station, an expected charging time of the SV, or a return time of the SV.

5. The automated valet driving method according to claim 3, wherein:
the controlling further comprises determining, by the AVDS, the target charging station from among the at least one charging station based on priority information of a user, and
the priority information is one of charging rate information, charging station brand information, or illuminance information when the SV moves.

6. The automated valet driving method according to claim 2, wherein:
the performing an autonomous vehicle operation further comprises starting, by the AVDS, driving the SV to the target charging station when the traveling start time is reached, and
the traveling start time is derived by the AVDS based on the expected charging completion time or a time before the expected charging completion time.

7. The automated valet driving method according to claim 6, wherein the performing an autonomous vehicle operation further comprises driving, by the AVDS, the SV to a waiting parking area when the SV arrives at the target charging station before charging of the vehicle is completed, or driving, by the AVDS, the SV to a charging area when the SV arrives at the target charging station after charging of the vehicle is completed.

8. The automated valet driving method according to claim 7, wherein:
the performing an autonomous vehicle operation further comprises:
transmitting, by the AVDS, escape information to the target charging station when the SV moves from the waiting parking area to the charging area in a case where the SV is driven to the waiting parking area; and
transmitting, by the AVDS, entry information to the target charging station when the SV enters the charging area,
the escape information comprises at least one of an identification ID of the waiting parking area, a time at which the SV enters the waiting parking area, or a target charging station management number of the SV, and
the entry information comprises at least one of an identification ID of the charging area, a time at which the SV enters the charging area, or the target charging station management number of the SV.

9. The automated valet driving method according to claim 1, wherein data for the autonomous vehicle operation is transmitted and received by the AVDS.

10. The automated valet driving method according to claim 9, wherein:
the data transmitted by the AVDS comprises at least one of vehicle information for the SV, charging reservation information, vehicle departure information, payment schedule type information, charging type availability information, charging reservation availability information, or charging rate information, and
the data received by the AVDS comprises at least one of charging type availability information, charging reservation availability information, or charging rate information.

11. The automated valet driving method according to claim 9, wherein:
the data received by the AVDS comprises at least one of currently available charging type information, charging reservation information, or charging rate information, and
the data transmitted by the AVDS comprises at least one of charging reservation confirmation information, expected vehicle arrival time information, payment method information, payment information, or vehicle information.

12. An automated valet driving device comprising:
a memory; and
a processor connected to the memory,
wherein the processor is configured to:
identify an SV,
perform check-in for the SV, and
perform an autonomous vehicle operation for the SV by the AVDS.

13. The automated valet driving device according to claim 11, wherein the autonomous vehicle operation performed by the AVDS controls a traveling start time of the SV based on an expected charging completion time of a vehicle at a target charging station, or data for the autonomous vehicle operation is transmitted and received by the AVDS.

14. A vehicle comprising:
an interface configured to exchange information with an AVDS; and
a controller configured to control automated valet driving,
wherein the processor is configured to:
perform an autonomous vehicle operation by the AVDS.

15. The vehicle according to claim 14, wherein the autonomous vehicle operation performed by the AVDS controls a traveling start time based on an expected charging completion time of a vehicle at a target charging station, or automated valet driving is performed by data transmitted and received by the AVDS.
